# EUROPEAN PATENT SPECIFICATION

(11) **EP 2 614 946 B1**
(45) Date of publication and mention of the grant of the patent: **07.11.2018**
(21) Application number: 11823253.7
(22) Date of filing: 07.09.2011
(51) Int. Cl.: B29C 47/68, B29C 47/08, B29B 7/80, B01D 29/15, B01D 29/52

(54) **SCREEN UNIT AND SCREEN CHANGER EQUIPPED WITH SAME**
SIEBEINHEIT UND DAMIT AUSGESTATTETER SIEBWECHSLER
ENSEMBLE TAMIS ET CHANGEUR DE TAMIS QUI EN EST ÉQUIPÉ

(30) Priority: 08.09.2010 JP 2010200868
(43) Date of publication of application: 17.07.2013
(73) Proprietor: Kabushiki Kaisha Kobe Seiko Sho, Chuo-ku Kobe-shi Hyogo 651-8585 (JP)
(72) Inventor: ARITA, Keizou, Hyogo 676-8670 (JP); IRITANI, Kazuo, Hyogo 676-8670 (JP); NAKATA, Yoshiaki, Hyogo 676-8670 (JP); MORINO, Hiroko, Hyogo 676-8670 (JP)
(74) Representative: TBK
(86) International application number: PCT/JP2011/005016
(87) International publication number: WO 2012/032774

(56) References cited:
- WO-A1-94/19086
- WO-A1-03/020396
- WO-A2-01/47687
- DE-A1- 2 315 344
- JP-A- 7 156 249
- JP-A- 47 039 160
- JP-A- H07 156 249
- JP-A- 2001 038 792
- JP-A- 2005 125 184
- JP-A- 2006 130 891
- JP-U- H0 395 207
- JP-U- S5 915 524
- JP-U- 59 015 524
- JP-U- 61 198 013
- JP-U- 64 048 221

## Description

The present invention relates to a screen unit and a screen changer for use in removing foreign matter from the material kneaded by kneading equipment.

Generally, kneading equipment such as an extruder or a continuous kneader is often accompanied by a screen changer equipped with a plurality of screen units for removing foreign matter such as unkneaded material or gel from the kneaded material.

For example, as such a screen changer, Document JP S47-39160 A discloses a filter apparatus provided upstream of an extrusion nozzle (extrusion die). The filter apparatus (screen changer) of Document JP S47-39160 A includes a housing having inside a flow passage through which resin (material) circulates, and a retention plate disposed in a direction orthogonal to the flow direction of resin (material) flowing through the housing. The retention plate is attached with a plurality of sieve members (screen units) in a detachable manner.

The sieve member includes a filter (screen pack) having mesh for filtering material, and a supporting gauze (cartridge) for supporting the filter. The filter and the supporting gauze are formed in a similar cylindrical shape with each other. The filter and the supporting gauze are used in a state that one of the filter and the supporting gauze is superposed on the other so as to be inserted inside.

For example, in the sieve member shown in Figs. 4 and 5 of Document JP S47-39160 A, in a state that the filter is inserted inside the supporting gauze, material passing from the inside of the filter toward the outside of the supporting gauze is filtered. Between the filter and the supporting gauze, a collar is provided on the side (base end side) closer to an opening end of the filter.

Meanwhile, in the sieve member shown in Figs. 6 to 8 of Document JP S47-39160 A, in a state that the outside of the supporting gauze is covered with the filter, material passing through from the outside of the filter toward the inside of the supporting gauze is filtered. In the sieve member, the inner circumference of the pipe-shaped filter fits to the outer circumference of the supporting gauze.

And now, in the sieve member shown in Figs. 4 and 5 of Document JP S47-39160 A described above, there is a need for controlling a gap between the filter and the supporting gauze to a reduced size. Thus, the collar
carries a function of filling the gap between the filter and the supporting gauze in the opening end side of the filter. Therefore, in the sieve member described in Patent Document 1, the collar is an essential member in superposing the filter and the supporting gauze on each other.

However, there are various specifications different in mesh size for filters, and the thickness of the filter is varied according to different specifications. Thus, various sized collars are required in accordance with such a specification of the filter, so that several kinds of collars must be prepared. Therefore, cost of filter is liable to rise.

In addition, in the sieve member shown in Figs. 4 and 5 of Document JP S47-39160 A, since great pressure is exerted on the filter with the mesh when filtering material, the filter expands from within outward. Here, the supporting gauze is disposed outside the filter. Therefore, if the filter expands until the outer circumferential surface of the collar comes into contact with the inner circumferential surface of the supporting gauze disposed outside, the filter does not further expand more than necessary.

However, since the members such as the filter and the supporting gauze are made of flat net-like material, it may cause relatively great errors in their inner diameter or outer diameter. If the filter or the supporting gauze having such a manufacturing error is used, the space where the filter can expand may be increased too much. In this case, since the filter is deformed greatly when pressure is exerted, the possibility of breakage of the
filter is increased.

Meanwhile, in the sieve member shown in Figs. 6 to 8 of Document JP S47-39160 A, material flows in a direction opposite to the one described above. Thus, force is applied on the filter in a contracting direction. Therefore, breakage of the filter is avoided in this configuration.

However, if manufacturing errors are caused in the filter or the supporting gauze, unexpected gap may be generated between the inner circumference at the opening end side of the pipe-shaped filter and the outer circumference of the supporting gauze. In this case, material flows into the inside of the supporting gauze through the gap without passing through the filter (short path phenomenon of material), which may result in insufficient filtration of material.

That is, in the screen unit described in Document JP S47-39160 A, there is a problem in that it is necessary to be designed minutely to dimensions that take into account expansion of the filter and to be manufactured so as to attain the above dimensions in order to prevent breakage of the filter and increase accuracy of filtration, and further it is necessary to be manufactured under rigorous dimension control so that the inner circumference of the filter fits to the outer circumference of the supporting gauze, so that manufacturing cost is liable to rise.

Therefore, there is a demand for a screen unit and a screen changer
which allow for preventing short path of material from between a screen pack and a cartridge without manufacturing the screen pack under rigorous dimension control and controlling a gap by a collar and which have cost advantages by eliminating rigorous dimension control of the inner diameter of the screen pack.

Document WO 03/020396 A1, which is considered as closest prior art document, discloses a screen unit which comprises a perforated supporting pipe, a filter medium as well as a supporting grid. The supporting pipe is welded to a screw member at one end, and is welded to a volume displacer at its other end. The supporting grid and the filter medium are held by means of two attachment members. The first attachment member attaches the filter medium to a thread portion of the screw member. The other attachment member can be operated by hand so that the assembly consisting of the filter medium, the supporting grid and both attachment members can be screwed onto the screw member and can be screwed off from the screw member.

Document DE 23 15 344 A1 discloses a screen changer including a screen unit. The screen unit consists of a plurality of cartridges. Basically, each cartridge comprises a supporting cage having a flange by means of which the supporting cage can be mounted to a holding plate of the screen changer. Further, the screen unit comprises an inner screen cage, which is arranged inside the supporting cage, as shown for example in. The inner screen cage consists of an outer layer made of a supporting wire mesh, an inner layer made of a fine screen mesh, and a common flange, wherein the inner screen cage is held inside the supporting cage by means of the flange.

Document WO 94/19086 A1 discloses a cylindrical filter assembly. The filter assembly comprises a filter cartridge and a cylindrical core assembly. The filter cartridge is configured by a filter element and two outer end cap segments which are attached to the ends of the filter element. The cylindrical core assembly is configured by a perforated core and two inner end cap segments which are attached to the ends of the perforated core. Furthermore, the inner end cap segments and the outer end cap segments are provided with corresponding tapered shoulders which axially engage with each other so that any forces acting on the filter element axially upwardly are transferred from the filter element to the core via the end cap segments.

The object of the present invention is to provide a screen unit which allows for eliminating rigorous dimension control for preventing the short path phenomenon of material and which has cost advantages, and a screen changer equipped with the same.

The object of the invention is achieved by a screen unit according to claim 1. Advantageous embodiments are carried out according to the dependent claims.

The present invention provides a screen unit for removing foreign matter from material, including: a cartridge including a cylindrical cartridge body and a cartridge bottom which closes an opening at a tip end side of the cartridge body; and a cylindrical screen pack capable of externally fitting from the tip end side to the cartridge body and capable of filtering the material, in which the cartridge body includes a hole-formed portion having a plurality of through
holes through which the material filtered by the screen pack is allowed to pass, and a contacted outer surface which is provided closer to a base end side than to the hole-formed portion and inclined so as to expand radially outwardly with decreasing distance to the base end, and the screen pack has a contacting inner surface which can closely contact with the contacted outer surface of the cartridge when being pressed from the tip end side toward the base end with the hole-formed portion covered from outside.

In addition, the present invention provides a screen changer, including: a housing having a flow passage through which material is passed; a slide member slidably mounted to the housing; and the screen unit which is provided on the slide member for filtering material passing through the flow passage of the housing.

According to the present invention, a screen unit which allows for eliminating rigorous dimension control for preventing the short path phenomenon of material and which has cost advantages, and a screen changer equipped with the same can be provided.

### BRIEF DECSRIPTION OF THE DRAWINGS

[Fig. 1] A front cross-sectional view of a screen changer equipped with a screen unit according to the present invention.
[Fig. 2] (a) is a cross-sectional view taken along the line II(a)-II(a) in Fig. 1, and (b) is an enlarged view of the section II(b) in (a).
[Fig. 3] (a) is an enlarged cross-sectional view showing a tip end side of the screen unit, and (b) is an enlarged cross-sectional view of a modification example of (a).
[Fig. 4] (a) is an enlarged cross-sectional view of a tip end side of a screen unit according to the second embodiment, and (b) is an enlarged cross-sectional view showing a state that a screen pack is mounted to a cartridge shown in (a).
[Fig. 5] Side cross-sectional views for illustrating the mounting procedure of a screen unit according to the first embodiment; (a) shows the screen unit before mounting, and (b) shows the screen unit after mounting.
[Fig. 6] Side cross-sectional views for illustrating the mounting procedure of a screen unit according to the third embodiment; (a) shows the screen unit before mounting, and (b) shows the screen unit after mounting.
[Fig. 7] An enlarged view showing a modification example using a cylindrical screen pack with both ends opened.

Embodiments of the present invention will now be described with reference to the appended drawings. It should be noted that the following embodiments are examples that embody the present invention, and are not intended to limit the technical scope of the present invention.

### First Embodiment

Hereinafter, a screen unit 1 and a screen changer 2 including the
screen unit 1 according to the embodiments of the present invention will be described in detail based on the drawings.

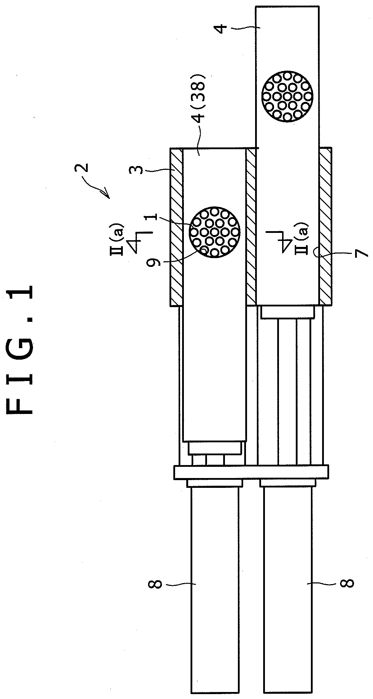

Fig. 1 shows the screen changer 2 equipped with the screen unit 1 according to the first embodiment. The screen changer 2 is disposed downstream of kneading equipment such as a continuous kneader or an extruder. In a kneading granulator in which the kneading equipment is accompanied by a granulator (pelletizer), the screen changer 2 performs granulation of pellets after foreign matter such as unkeadead material or gel is removed from the material (resin) kneaded by the kneading equipment. The screen changer 2 illustrated in Fig. 1 is provided in the kneading granulator, and can perform exchange or replacement of the screen unit 1 for removing foreign matter.

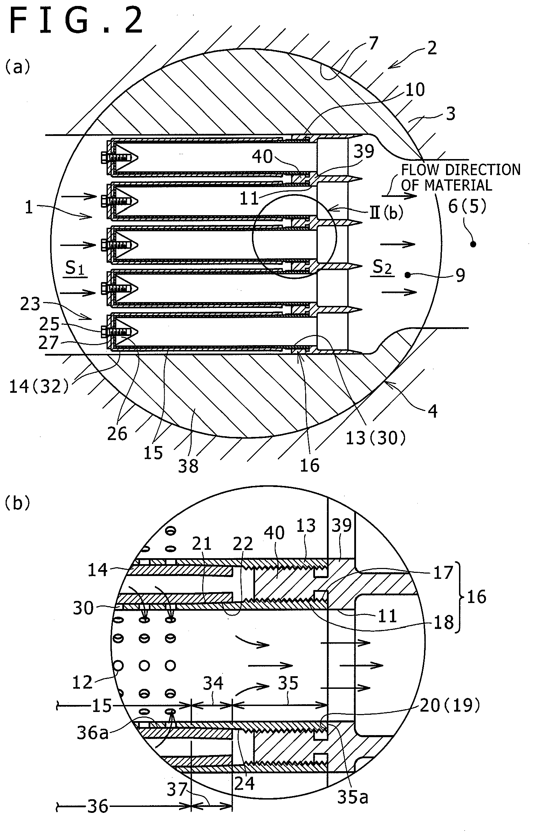

It should be noted that the left side on a paper of Fig. 2(a) is referred to as a tip end side or upstream side and the right side on the paper is referred to as a base end side or downstream side, in the following description of the screen unit 1.

As shown in Fig. 1 or 2, the screen changer 2 includes a housing 3, a pair of upper and lower slide members 4, 4 slidably mounted to the housing 3, a plurality of screen units 1 mounted to the respective slide members 4, 4, and a driving member 8 (refer to Fig. 1) which moves the respective slide members 4 to the housing 3.

The housing 3 is a box-shaped member disposed downstream of the kneading equipment. Inside the housing 3, a flow passage 5 through which the kneaded material is allowed to circulate is formed. More specifically, the flow passage 5 is formed so as to pass through the inside of the housing 3. In addition, the flow passage 5 enables the material to circulate from the upstream side toward the downstream side (in a direction perpendicular to a plane of paper of Fig. 1 and heading from the near side to the far side).

The flow passage 5 is one flow passage at entry side of the housing 3, and branches into two upper and lower branch flow passages 6, 6 inside the housing 3. Each of the branch flow passages 6 extends in a direction intersecting with the slide member 4 (in a direction orthogonal thereto, in the present embodiment). Then, these branch flow passages 6, 6 join into one flow passage at the downstream side of the slide member 4, that is, at the exit side of the housing 3.

Inside the housing 3, a pair of guide holes 7, 7 for slidably receiving each of the respective slide members 4 is formed. The respective guide holes 7, 7 are arranged one above the other corresponding to the upper branch flow passage 6 and the lower branch flow passage 6, respectively. In addition, the respective guide holes 7, 7 extend in a direction orthogonal to the respective branch flow passages 6, 6, respectively.

The slide member 4 is slidable along the guide hole 7 between the attaching/detaching position (the position of the slide member 4 below shown in Fig. 1) where the screen unit 1 described later can be attached and detached and the filtration position (the position of the slide member 4 above shown in Fig. 1) where the material flowing through the housing 3 is filtered.

More specifically, the slide member 4 includes a slide body 38 which is slidably inserted into the guide hole 7, and a mounting member 10 provided in the slide body 38. The slide body 38 is formed in a rod shape capable of restricting circulation of material between the outer surface of the slide body 38 and the inner surface of each of the guide holes 7, 7 and being inserted into the guide hole 7. In addition, at the longitudinal halfway point of the slide body 38, a connecting passage 9 passing through the slide body 38 in a direction orthogonal to the longitudinal direction is formed. The connecting passage 9 is connected to the branch flow passages 6 of the housing 3 and circulates the material therethrough. More specifically, an opening of the connecting passage 9 is provided at a position corresponding to the branch flow passage 6 (flow passage 5) of the housing 3, and is the same shape as the opening of the branch flow passage 6.

The mounting member 10 is provided inside the connecting passage 9 for mounting the screen unit 1. More specifically, the mounting member 10 includes a partition wall 39 for dividing the connecting passage 9 into an upstream side chamber S1 and a downstream side chamber S2, and a plurality of mounted portions 40 which protrudes to the upstream side from the partition wall 39 and to which the plurality of screen units 1 is mounted detachably. The partition wall 39 is formed in the shape of a plate mounted so as to block material flowing through the connecting passage 9. In the partition wall 39, a plurality of communication passages 11 which communicates the upstream side chamber S1 and the downstream side chamber S2 is formed. The respective mounted portions 40 are provided at the positions corresponding to the respective communication passages 11, respectively. More specifically, the mounted portion 40 is formed in a cylindrical shape protruding to the tip end side from the partition wall 39, in a state that an abutted surface 20 which is a circumferential edge of the communication passage 11 is surrounded. At the inner circumferential part of each of the abutted portions 40, a female screw part 18 for mounting the screen unit 1 is formed.

The driving member 8 is provided at one end (the left side on a paper in the example of Fig. 1) of the slide member 4, and is a hydraulic cylinder which moves the slide member 4 along the guide hole 7.

As shown in Fig. 2(a), the screen unit 1 is an elongated member for filtering material within the connecting passage 9. In addition, the screen unit 1 is attached to the upstream side of the mounting member 10 so as to block the communication passage 11. More specifically, the respective screen units 1 include a cylindrical cartridge 13 having, in the outer circumferential surface, a plurality of through holes 12 through which material in the outside is allowed to pass to the inside, a screen pack 14 which includes a mesh for filtering material and is attached so as to cover the cartridge 13 from outside, and a pressing mechanism 23 for pressing the screen pack 14 to the cartridge 13, respectively.

The cartridge 13 includes a cartridge body 30 formed in a cylindrical shape, and a cartridge bottom 31 which closes an opening of the cartridge body 30. In the embodiment described in Fig. 2(a), the cartridge body 30 is mounted to the mounting member 10, in a state that its axial center is parallel to the flow direction of material (the right-and-left direction of Fig. 2) within the connecting passage 9.

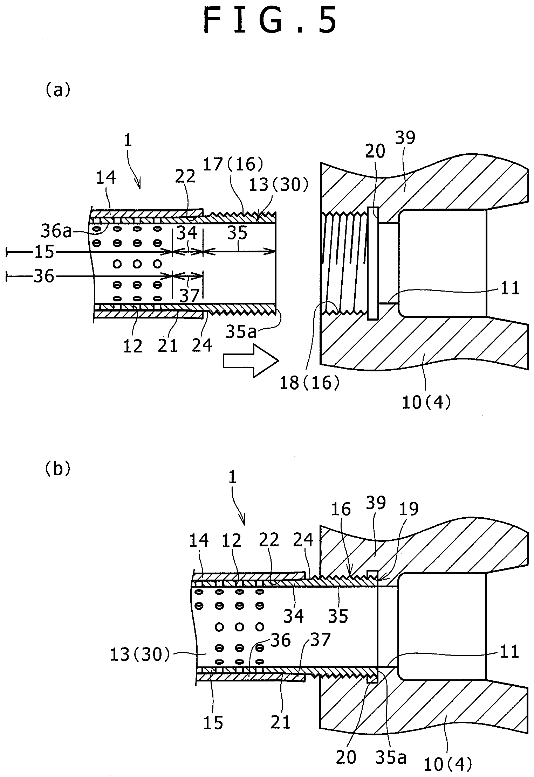

The cartridge body 30 is a cylindrical member with its tip end and base end opened. More specifically, as shown in Figs. 2(b) and 5, the cartridge body 30 includes a hole-formed portion 15 having the plurality of through holes 12 through which the material filtered by the screen pack 14 is allowed to pass, a contacted portion 34 connected to the base end side of the hole-formed portion 15, and a mounting portion 35 connected to the base end side of the contacted portion 34 and capable of mounting to the mounting member 10. The hole-formed portion 15 supports the screen pack 14 arranged on the outer circumferential side from inside. In addition, the hole-formed portion 15 is a cylinder having constant inner diameter dimension and outer diameter dimension over the entire length in the longitudinal direction. An inner diameter dimension of the contacted portion 34 is identical to the inner diameter dimension of the hole-formed portion 15, and is constant over the entire length in the longitudinal direction of the contacted portion 34. Meanwhile, the contacted portion 34 has a tapered contacted outer surface 21 inclined so as to expand radially outwardly with decreasing distance to the base end. More specifically, a diameter dimension of the contacted outer surface 21 is increased from the outer diameter dimension of the hole-formed portion 15 with decreasing distance to the base end. An inner diameter dimension of the mounting portion 35 is identical to the inner diameter dimension of the contacted portion 34, and is constant over the entire length in the longitudinal direction of the mounting portion 35. Meanwhile, an outer diameter dimension of the mounting portion 35 is identical to the largest diameter dimension of the contacted outer surface 21, and is constant over the entire length in the longitudinal direction of the mounting portion 35.

In other words, in the outer circumferential surface of the cartridge 13, the range of the hole-formed portion 15 from the tip end side to a halfway point is a straight shape having a small diameter, and the range of the mounting portion 35 at the base end side is a straight shape having a large diameter. The range between the hole-formed portion 15 and the mounting portion 35 in the outer circumferential surface of the cartridge 13 is a tapered shape inclined so as to increase the diameter than the hole-formed portion 15 with decreasing distance to the base end. The outer circumferential surface formed in a tapered shape is the contacted outer surface 21. The contacted outer surface 21 is inclined while expanding radially outwardly in a gradual manner with decreasing distance to the base end and keeping a constant angle of inclination to the horizontal direction.

In the mounting portion 35, a male screw part 17 having threads protruding from the outer surface thereof is formed. Between the thread closest to the tip end of the male screw part 17 and the base end of the contacted portion 34, a flat part 24 having no threads is provided. That is, a portion corresponding to the flat part 24 in the mounting portion 35 has a straight outer circumferential surface. The outer circumferential surface of the flat part 24 is used as a relief part for enabling the screen pack 14 to be pressed from the tip end side toward the base end (to the axial direction) with respect to the cartridge 13. By providing the flat part 24, restriction of movement of the screen pack 14 in the axial direction (the pressing direction) of the base end surface can be prevented. Thus, after a contacting inner surface 22 slightly contacts with the contacted outer surface 21, the screen pack 14 can be further moved (pressed) from that position to the base end side. Therefore, even if an inner diameter of the screen pack 14 is larger than the design dimension due to manufacturing errors, contact between the contacted outer surface 21 and the contacting inner surface 22 can be performed strongly and firmly.

In addition, a base end surface 35a of the mounting portion 35 abuts on the abutted surface 20 of the partition wall 39 by screwing the male screw part 17 into the female screw part 18 of the mounting member 10. In the present embodiment, the base end surface 35a of the mounting portion 35 and the abutted surface 20 of the partition wall 39 constitute a seal means 19. More specifically, the seal means 19 restricts the flow of material passing through between the cartridge 13 and the partition wall 39. Since an inner diameter of the mounted portion 40 is larger than an inner diameter of the communication passage 11, a step is formed in the radial direction between the inner circumferential surface of the mounted portion 40 and the inner circumferential surface of the communication passage 11. On the step, the flat abutted surface 20 facing the tip end side is provided. Thus, as shown in Fig. 5(b), when the cartridge 13 is inserted in the mounted portion 40 from the state shown in Fig. 5(a), the base end surface 35a of the cartridge 13 comes into surface contact with the abutted surface 20. Thereby, the flow of material passing through between the base end surface 35a and the abutted surface 20 is restricted.

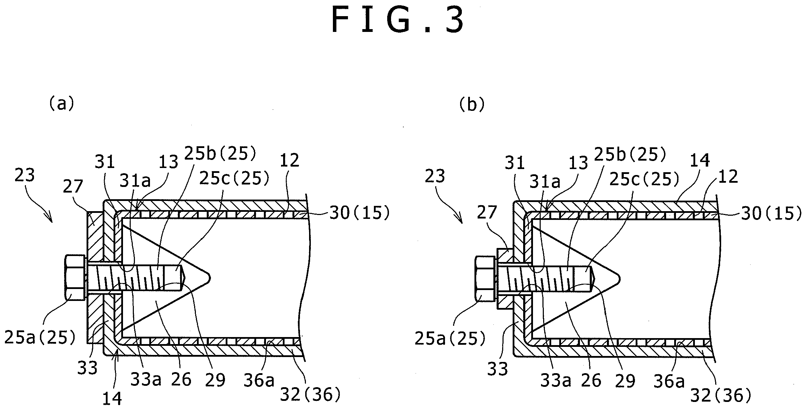

As shown in Figs. 2 and 3, the cartridge bottom 31 closes the opening at the tip end side of the cartridge body 30. Therefore, in the cartridge 13, circulation of material through the end surface (cartridge bottom 31) of the tip end side of the cartridge body 30 is restricted. Meanwhile, the base end of the cartridge body 30 opens toward the downstream side. Further, the opening at the base end side of the cartridge body 30 is in communication with the communication passage 11 of the slide member 4, in a state that the cartridge 13 is mounted to the mounting member 10. Therefore, the material introduced from outside to inside the cartridge 13 through the respective through holes 12 is guided inside the communication passage 11 of the slide member 4.

In the present embodiment, the male screw part 17 and the female screw part 18 are provided at the tip end side of the cartridge 13, and constitute a connecting portion 16 which connects the cartridge 13 to the communication passage 11 in a detachable manner. By screwing the male screw part 17 into the female screw part 18, the cartridge 13 can be attached to and detached from the mounted portion 40.

The screen pack 14 is supported from inside by the cartridge body 30, in a state of being arranged so as to cover the cartridge body 30 from outside. More specifically, the screen pack 14 includes a screen pack body 32 capable of externally fitting from the tip end side to the cartridge body 30, and a screen pack bottom 33 which closes an opening at the tip end side of the screen pack body 32.

The screen pack body 32 is formed in a cylindrical shape with its tip end and base end opened. In addition, the screen pack body 32 is arranged outside the cartridge body 30, so as to be coaxial with the cartridge body 30. The screen pack body 32 includes a straight portion 36 at the tip end side, and a tapered portion 37 connected to the base end of the straight portion 36. The straight portion 36 can be mounted to the cartridge 13 so as to cover the hole-formed portion 15 from outside. More specifically, the straight portion 36 has a length dimension equivalent to a length dimension of the hole-formed portion 15. In addition, the straight portion 36 is a cylinder having constant inner diameter dimension and outer diameter dimension over the entire length in the longitudinal direction. The inner surface of the straight portion 36 constitutes a covering surface 36a whose inner diameter dimension is set so as to be identical to or slightly larger than an outer diameter dimension of the cartridge body 30. The tapered portion 37 can be mounted to the cartridge 13 so as to cover the contacted portion 34 from outside. More specifically, the tapered portion 37 has a length dimension equivalent to a length dimension of the contacted portion 34. In addition, the tapered portion 37 has the contacting inner surface 22 inclined so as to expand radially outwardly with decreasing distance to the base end, and the outer surface parallel thereto. The contacting inner surface 22 is inclined at an angle corresponding to the contacted outer surface 21 (an angle parallel to the contacted outer surface 21, in the present embodiment) so as to come into surface contact with the contacted outer surface 21. An inner diameter dimension of the contacting inner surface 22 is set so as to be equivalent to or slightly larger than the contacted outer surface 21.

In the present embodiment, when the screen pack 14 is inserted in the cartridge 13 until the contacted outer surface 21 and the contacting inner surface 22 slightly contact each other, a gap in the longitudinal direction of the screen unit 1 is formed between the inner surface of the screen pack bottom 33 and the outer surface of the cartridge bottom 31. The gap is used as a relief part which allows for further moving the screen pack 14 toward the base end. More specifically, the relief part is used for contacting the contacting inner surface 22 with the contacted outer surface 21 firmly by pressing the screen pack 14 to the cartridge 13 side strongly. In other words, the screen pack body 32 has a length capable of covering at least a part (the whole in the present embodiment) of the contacted outer surface 21 from outside in a state that the screen pack bottom 33 and the cartridge bottom 31 are abutted.

The screen pack 14 is formed of material (mesh material) with very fine meshes. The mesh material has meshes of size corresponding to the size of foreign matter such as gel or unkneaded material included in material. Therefore, foreign matter included in material is removed when passing through the screen pack 14 from outside to inside.

In addition, the thickness of the screen pack 14 varies according to the mesh size. Here, even if the thickness of the screen pack 14 is different, the screen pack 14 can be mounted to the cartridge body 30 as long as the inner diameter of the screen pack 14 corresponds to the outer diameter of the cartridge body 30.

As shown in Fig. 3, the pressing mechanism 23 is provided on the tip end of the screen pack 14 and the cartridge 13, and presses the screen pack 14 in the axial direction (longitudinal direction) toward the cartridge 13. The pressing mechanism 23 according to the invention includes a bolt member 25 passing through the screen pack 14 and the cartridge 13 from outside, a nut member 26 provided inside the cartridge 13 and capable of being screwed onto the bolt member 25, and a washer 27 provided between a head 25a of the bolt member 25 and the screen pack bottom 33.

The bolt member 25 passes through the screen pack bottom 33 and the cartridge bottom 31 from outside. More specifically, the bolt member 25 includes a shaft part 25b which is inserted into an insertion hole 33a formed in the screen pack bottom 33 and an insertion hole 31a formed in the cartridge bottom 31, and the head 25a provided on a tip end of the shaft part 25b. A screw point 25c of the shaft part 25b is screwed into the nut member 26 inside the cartridge 13.

The washer 27 covers almost the entire surface of the end surface (bottom surface) at the tip end side of the cartridge 13 and the screen pack 14. More specifically, the washer 27 is formed to be equivalent to or larger than the outer diameter of the cartridge 13 (cartridge bottom 31). Thereby, the washer 27 can prevent the screen pack 14 from coming out of the cartridge 13 to the tip end side, by holding the screen pack 14 from the tip end side thereof.

The nut member 26 is a member formed in an approximately conical shape, and is arranged inside the cartridge 13 so as to direct its top to the base end side. Thereby, it is possible to prevent material from staying at the tip end side inside the cartridge 13. In the end surface at the tip end side of the nut member 26, a screw hole 29 into which the shaft part 25b of the bolt member 25 can be screwed is formed. The screw hole 29 extends horizontally toward the base end.

By screwing the bolt member 25 into the nut member 26, the screen pack 14 is pressed toward the tip end with respect to the cartridge 13. More specifically, by screw engagement of the bolt member 25 and the nut member 26, the screen pack bottom 33 is pulled toward the cartridge bottom 31. When the screen pack 14 is pressed by the pressing mechanism 23, the contacted outer surface 21 and the contacting inner surface 22 come into contact firmly in the circumferential direction.

Therefore, even if the inner diameter of the screen pack 14 varies somewhat, the contacted outer surface 21 of the cartridge 13 and the contacting inner surface 22 of the screen pack 14 pressed toward the contacted outer surface 21 come into contact with each other in part over the whole circumference certainly. Thereby, even the screen pack 14 whose inner diameter is slightly larger than a predetermined diameter due to manufacturing errors can be mounted firmly to the cartridge 13.

Now, operational effects achieved by the screen unit 1 according to the present embodiment will be described.

As described above, the flat part 24 (relief part) is provided at the base end of the cartridge 13, and the screen pack body 32 has a length capable of covering at least a part (the whole in the present embodiment) of the contacted outer surface 21 from outside in a state that the screen pack bottom 33 and the cartridge bottom 31 are abutted. Thereby, it is possible to press the screen pack 14 toward the base end with respect to the cartridge 13. Therefore, even if the inner diameter of the screen pack 14 is larger than the setting value due to manufacturing errors, it is possible to firmly contact the contacting inner surface 22 and the contacted outer surface 21. Thereby, it is possible to prevent a gap in the circumferential direction from generating between the contacting inner surface 22 and the contacted outer surface 21.

Further, the contacted outer surface 21 and the contacting inner surface 22 are inclined at the same angle with each other. Thereby, the contacted outer surface 21 and the contacting inner surface 22 can be brought into surface contact. Therefore, by pressing the screen pack 14 from the tip end side toward the base end with respect to the cartridge 13 by means of the pressing mechanism 23, it is possible to contact the contacted outer surface 21 and the contacting inner surface 22, without any gap. Thereby, it is possible to prevent material from leaking outside the screen unit 1 and entering inside the screen unit 1, from between the screen pack 14 and the cartridge 13.

As described above, the inner diameter of the screen pack 14 may be larger than a predetermined diameter that fits to the outer diameter of the cartridge 13 (hole-formed portion 15), due to manufacturing errors. In such a case, material may be liable to leak from a gap between the screen pack 14 and the cartridge 13. In addition, material may stay between the screen pack 14 and the cartridge 13, and the material is burned, which may result in deterioration of kneading quality. Here, by contacting the tapered contacted outer surface 21 and the contacting inner surface 22, even if the inner diameter of the screen pack 14 varies somewhat with respect to the setting value due to manufacturing errors, contact condition in the circumferential direction of the contacted outer surface 21 and the contacting inner surface 22 can be maintained. Thereby, leakage of material or deterioration of kneading quality can be suppressed.

In addition, with the above configuration, even if there are some gaps between the hole-formed portion 15 of the cartridge 13 and the screen pack 14, it is possible to closely contact the contacted outer surface 21 and the contacting inner surface 22. Therefore, rigor of dimension control for the screen pack 14 and the cartridge 13 can be eased, and increases in manufacturing cost of the screen unit 1 can be suppressed.

It should be noted that in the screen unit 1 of the first embodiment described above, the washer 27 of the pressing mechanism 23 has a size that covers almost the entire surface of the tip end surface of the cartridge 13 or the screen pack 14. However, as shown in Fig. 3(b), the washer 27 may be smaller than the outer diameter of the cartridge 13.

As explained above, in the above embodiment, the contacted outer surface 21 inclined so as to expand radially outwardly with decreasing distance to the base end is formed on the cartridge 13, and the screen pack 14 has the contacting inner surface 22 capable of closely contacting to the contacted outer surface 21. Thereby, even if some manufacturing error is caused in the inner diameter of the screen pack 14, by pressing the screen pack from the tip end side toward the base end, it is possible to contact the contacted outer surface 21 and the contacting inner surface 22. Therefore, short path of the material passing between the screen pack 14 and the cartridge 13 can be prevented.

In addition, since the contacting inner surface 22 is brought into closely contact with the tapered contacted outer surface 21, contact of the contacted outer surface 21 and the contacting inner surface 22 can be maintained even if there are some gaps between the screen pack 14 and the hole-formed portion 15 of the cartridge 13. Therefore, control of gap by a collar and rigorous dimension control for a screen pack or the like as in the case of the conventional screen pack 14 can be eliminated, and the present screen pack has cost advantages compared to the conventional one.

In the above embodiment, the contacting inner surface 22 is inclined at an angle parallel to the contacted outer surface 21. Thereby, compared to a case where the contacting inner surface 22 is not parallel to the contacted outer surface 21, it is possible to increase a closely contacting range of the contacting inner surface 22 and the contacted outer surface 21. However, it is not intended to limit the contacting inner surface 22 to be parallel to the contacted outer surface 21.

In the above embodiment, the mounting portion 35 connected to the base end side of the contacted outer surface 21 is a size that does not protrude outside from the contacted outer surface 21 when viewed from the tip end side. Thereby, the base end of the screen pack 14 can be firmly pressed to a position beyond the contacted outer surface 21. Therefore, it is possible to closely contact the contacting inner surface 22 with the contacted outer surface 21 firmly.

In the above embodiment, the screen pack 14 includes the screen pack bottom 33. Therefore, when externally fitting the screen pack 14 from the tip end side to the cartridge 13, movement of the screen pack 14 is restricted by abutment of the screen pack bottom 33 and the cartridge bottom 31. In the above embodiment, the screen pack body 32 has a length capable of covering at least a part of the contacted outer surface 21 from outside in a state that the screen pack bottom 33 and the cartridge bottom 31 are abutted. Thereby, even in a state that movement of the screen pack 14 is restricted, it is possible to closely contact the contacted outer surface 21 and the contacting inner surface 22 firmly.

In the above embodiment, the screen unit 1 includes the pressing mechanism 23 for pressing the screen pack 14 from the tip end side toward the base end with respect to the cartridge 13. Thereby, it is possible to closely contact the contacting inner surface 22 with the contacted outer surface 21 firmly.

In the above embodiment, by means of the bolt member 25 and the nut member 26, the screen pack bottom 33 can be pressed toward the base end with respect to the cartridge bottom 31. Thereby, unlike in the case of pressing the screen pack body 32 toward the base end, it is possible to press the whole of the screen pack 14 toward the base end by pressing the screen pack bottom 33.

In the above embodiment, by screwing the bolt member 25 from outside the cartridge 13 into the nut member 26 positioned inside the cartridge 13, the cartridge bottom 31 can be pressed to the screen pack bottom 33.

In the above embodiment, by mounting the screen unit 1 to the mounted portion 40, inflow of material heading for the communication passage 11 from the upstream side chamber S1 without passing through the screen unit 1 is restricted. Therefore, while enabling attachment and detachment of the screen unit 1, the filtered material can be surely guided to the downstream side chamber S2, in a state that the screen unit 1 is mounted.

In the above embodiment, by using a force of screw engagement of the male screw part 17 and the female screw part 18 as a force by which the cartridge body 30 and the partition wall 39 are abutted, inflow of material passing through between the cartridge body 30 and the partition wall 39 can be restricted. Therefore, restricting state of inflow of material can be maintained in a state that the screen unit 1 is mounted. In addition, in the above embodiment, by abutment of the cartridge body 30 and the partition wall 39, screw engagement of the male screw part 17 and the female screw part 18 is restricted. Therefore, it is possible to surely inform an operator of an end point position of screw engagement of the male screw part 17 and the female screw part 18.

### [Second Embodiment]

Now, the screen unit 1 according to the second embodiment will be described.

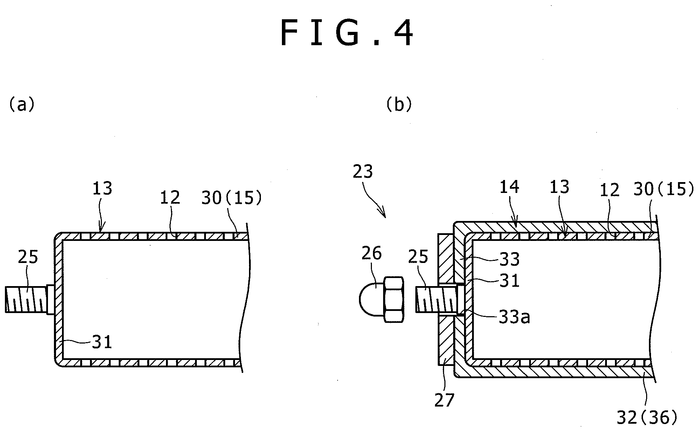

As shown in Figs. 4(a) and 4(b), the screen unit 1 according to the second embodiment is different from the first embodiment in terms of the pressing mechanism 23.

More specifically, the pressing mechanism 23 according to the present embodiment includes the bolt member 25 fixed to a surface facing the tip end side of the cartridge bottom 31, the nut member 26 screwed onto the bolt member 25 from the tip end side, and the washer 27 through which the bolt member 25 is passed. The bolt member 25 includes the shaft part 25b which passes through the screen pack bottom 33 from the cartridge bottom 31, and the screw point 25c arranged closer to the tip end side than to the screen pack bottom 33.

As shown in Fig. 4(b), in the screen pack bottom 33 according to the second embodiment, as is the case with the first embodiment, the insertion hole 33a into which the shaft part 25b of the bolt member 25 is inserted is formed. Then, onto the screw point 25c of the bolt member 25 passed through the screen pack bottom 33 by way of the insertion hole 33a, the nut member 26 (a box nut member, in the present embodiment) is screwed. The washer 27 is interposed between the nut member 26 and the screen pack bottom 33.

In the screen unit 1 according to the second embodiment, unlike with the first embodiment, there is no need to provide the nut member 26 inside the cartridge 13. Therefore, if the cartridge bottom 31 or the washer 27 (in the case of having a large diameter) in which a through hole is provided is used, even the screen pack bottom 33 can perform filtration. Therefore, it is possible to increase filtration area compared to the first embodiment.

In the above embodiment, by means of the bolt member 25 fixed to the cartridge bottom 31 and the nut member 26 into which the bolt member 25 is screwed from the tip end side, the screen pack 14 can be pressed. Thereby, unlike in case of providing the nut member 26 inside the cartridge 13, it is possible to limit the mounting positions of the bolt member 25 and the nut member 26 to the outside of the cartridge 13. Thereby, mounting operation of the bolt member 25 and the nut member 26 is facilitated.

### [Third Embodiment]

Now, the screen unit 1 according to the third embodiment will be described.

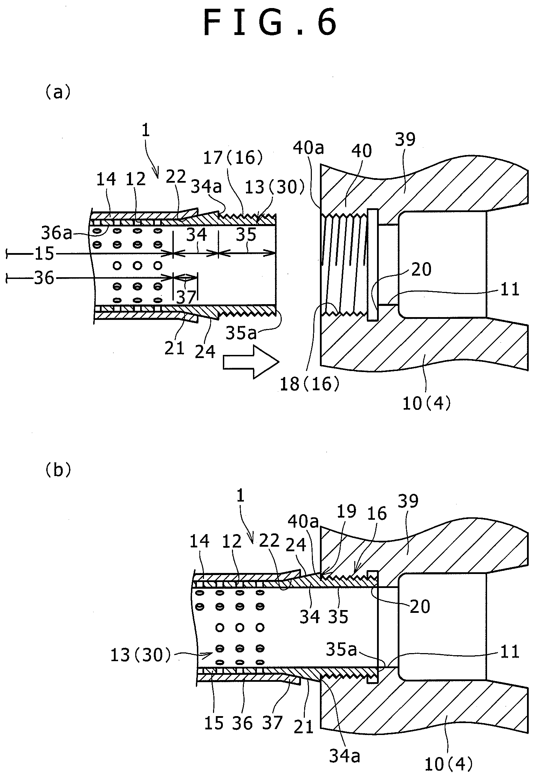

As shown in Figs. 6(a) and 6(b), the screen unit 1 according to the third embodiment is different from the first and the second embodiments in terms of the seal means 19.

More specifically, in the third embodiment, the outer diameter of the mounting portion 35 of the cartridge 13 is smaller than the outer diameter of the contacted portion 34. Thereby, between the contacted portion 34 and the mounting portion, a step is formed. More specifically, on the contacted portion 34, an annular abutting surface 34a facing the base end side is formed. The abutting surface 34a is a surface for abutting on an abutted surface 40a of the mounted portion 40 of the slide member 4.

The abutting surface 34a and the abutted surface 40a are flat surfaces respectively, and constitute the seal means 19. The abutting surface 34a faces the tip end side, and can be brought into surface contact with the abutted surface 40a of the mounting member 10 (mounted portion 40) in which the communication passage 11 is formed. By this surface contact, leakage of material passing between the abutting surface 34a and the abutted surface 40a can be prevented.

The seal means 19 according to the third embodiment uses the upstream side end surface (abutted surface 40a) of the mounting member 10 as a seal surface. Therefore, although shown in Fig. 6, the seal means 19 (the base end surface 35a and the abutted surface 20) according to the first embodiment can be eliminated. Therefore, the seal means 19 according to the present embodiment is capable of sealing by a simpler structure than that of the seal means of the first embodiment.

In addition, in the cartridge 13 according to the third embodiment, a length from the tip end of the hole-formed portion 15 to the base end of the contacted portion 34 (the contacted outer surface 21) is longer than the screen pack body 32. In other words, in a state that the screen pack bottom 33 and the cartridge bottom 31 are abutted, the screen pack body 32 has a length capable of covering only the tip end of the contacted outer surface 21 from outside. Therefore, in the third embodiment, a portion 24, which is exposed from the screen pack body 32, of the contacted outer surface 21, can be used as a relief part which allows for movement of the screen pack body 32 toward the base end.

It should be noted that, in the third embodiment, the outer diameter of the mounting portion 35 is smaller than the outer diameter of the contacted portion 34. Therefore, by increasing the length of the screen pack body 32 than the length from the tip end of the hole-formed portion 15 to the base end of the contacted portion 34, the contacted portion 34 can be used as a relief part. That is, the contacted portion 34 according to the third embodiment is a size hidden behind the base end (the most expanded portion) of the contacted outer surface 21, when viewed from the tip end side. Thereby, the screen pack body 32 can be firmly pressed to a position beyond the contacted outer surface 21.

It should be noted that, in the third embodiment, the contacted portion 34 and the threads of the male screw part 17 are provided adjacently without spacing.

The present invention is not limited to the above embodiments, but the shapes, structures, materials and combinations of the respective members can be appropriately changed within the scope not altering the essence of the invention.

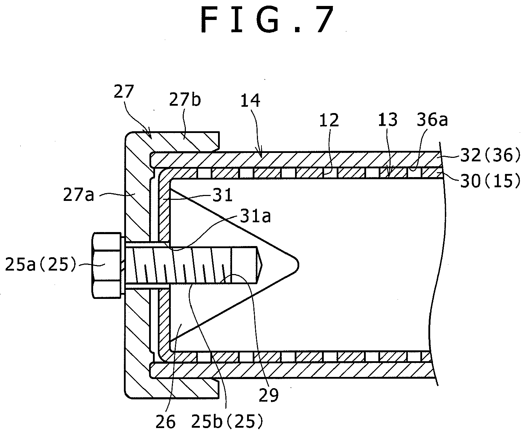

For example, in the first to the third embodiments described above, although the screen pack 14 includes the screen pack body 32 and the screen pack bottom 33, the shape of the screen pack 14 is not limited to a bottomed cylindrical shape. For example, as shown in Fig. 7, the screen pack 14 which eliminates the screen pack bottom 33 and includes the cylindrical screen pack body 32 with both ends opened may be used. In this case, the washer 27 preferably includes a lid part 27a arranged orthogonal to an axis of the cartridge 13, and a side wall 27b which protrudes from a circumferential edge of the lid part and is provided over the whole circumference around the axis. That is, the cap-like washer 27 having an approximately C-shaped cross section along the radial direction of the cartridge 13 may be preferably used.

The cap-like washer 27 can cover the circumference of the tip end surface and the tip end of the screen pack 14 without any gap from outside. By means of the washer 27, the opening at the tip end side of the screen pack 14 can be firmly closed. In the center of the washer 27, a hole into which the bolt member 25 can be inserted is formed. When the washer 27 is pressed toward the base end by screwing the bolt member 25 into the nut member 26, the washer 27 is pushed against the opening at the tip end side of the screen pack 14. Thereby, leakage of material through between the washer 27 and the screen pack 14 is prevented.

In the first to the third embodiments described above, as an example, the pressing mechanism 23 presses the screen pack 14 to the cartridge 13 by screwing the male screw part 17 and the female screw part 18. However, the pressing mechanism 23 is not limited to such a pressing mechanism that generates pressing force by screw engagement. For example, a locking mechanism or the like which fixes the screen pack 14 in a state of being pressed toward the base end with respect to the cartridge 13 may be adopted as the pressing mechanism 23.

In addition, in the above embodiments, the screen unit 1 is provided in such a manner that the longitudinal direction of the screen unit 1 and the sliding direction of the slide member 4 (a slide bar) are orthogonal to each other. However, the screen unit 1 may be arranged in such a manner that the longitudinal direction of the screen unit 1 and the sliding direction of the slide member 4 coincide with each other. In this case, it goes without saying that the structure of the connecting passage 9 of the slide member 4, the position of the flow passage 5 (the branch flow passages 6) of the housing 3, and the like must be appropriately changed in design, accordingly.

In addition, in the above embodiments, the pressing mechanism 23 is used.

It should be noted that the specific embodiments described above mainly cover the invention with the following configuration.

In order to solve the above-mentioned problem, the present invention provides a screen unit for removing foreign matter from material, including: a cartridge including a cylindrical cartridge body and a cartridge bottom which closes an opening at a tip end side of the cartridge body; and a cylindrical screen pack capable of externally fitting from the tip end side to the cartridge body and capable of filtering the material, in which the cartridge body includes a hole-formed portion having a plurality of through holes through which the material filtered by the screen pack is allowed to pass, and a contacted outer surface which is provided closer to a base end side than to the hole-formed portion and inclined so as to expand radially outwardly with decreasing distance to the base end, and the screen pack has a contacting inner surface which can closely contact with the contacted outer surface of the cartridge when being pressed from the tip end side toward the base end with the hole-formed portion covered from outside.

In the present invention, the contacted outer surface inclined so as to expand radially outwardly with decreasing distance to the base end is
formed on the cartridge, and the screen pack has the contacting inner surface capable of closely contacting with the contacted outer surface. Thereby, even if some manufacturing error is caused in the inner diameter of the screen pack, by pressing the screen pack from the tip end side toward the base end, it is possible to contact the contacted outer surface and the contacting inner surface. Therefore, short path of material passing between the screen pack and the cartridge can be prevented.

In addition, since the contacting inner surface is brought into closely contact with the tapered contacted outer surface, contact of the contacted outer surface and the contacting inner surface can be maintained even if there are some gaps between the screen pack and the hole-formed portion of the cartridge. Therefore, control of gap by a collar and rigorous dimension control for a screen pack or the like as in the case of the conventional screen pack can be eliminated, and the present screen pack has cost advantages compared to the conventional one.

In the above screen unit, the contacting inner surface is preferably inclined at an angle parallel to the contacted outer surface.

In this mode, the contacting inner surface is inclined at an angle parallel to the contacted outer surface. Thereby, compared to a case where the contacting inner surface is not parallel to the contacted outer surface, it is possible to increase a closely contacting range of the contacting inner surface and the contacted outer surface.

In the above screen unit, a portion, which is connected to the base end side of the contacted outer surface, of the outer surface of the cartridge body is preferably a size that is equivalent to or hidden behind the most expanded portion of the contacted outer surface when viewed from the tip end side.

In this mode, the portion connected to the base end side of the contacted outer surface is a size that does not protrude outside from the contacted outer surface when viewed from the tip end side. Thereby, the base end of the screen pack can be firmly pressed to a position beyond the contacted outer surface. Therefore, it is possible to closely contact the contacting inner surface with the contacted outer surface firmly.

In the above screen unit, the screen pack preferably includes a screen pack body capable of externally fitting to the cartridge body, and a screen pack bottom which closes an opening at a tip end side of the screen pack body. The screen pack body preferably has a length capable of covering at least a part of the contacted outer surface from outside in a state that the screen pack bottom and the cartridge bottom are abutted.

In this mode, the screen pack includes the screen pack bottom. Therefore, when externally fitting the screen pack from the tip end side to the cartridge, movement of the screen pack is restricted by abutment of the screen pack bottom and the cartridge bottom. In the above mode, the screen pack body has a length capable of covering at least a part of the contacted outer surface from outside in a state that the screen pack bottom and the cartridge bottom are abutted. Thereby, even at a position where movement of the screen pack is restricted, it is possible to closely contact the contacted outer surface and the contacting inner surface firmly.

Preferably, the above screen unit further includes a pressing mechanism for pressing the screen pack from the tip end side toward the base end with respect to the cartridge.

In this mode, the screen unit includes the pressing mechanism for pressing the screen pack from the tip end side toward the base end with respect to the cartridge. Thereby, it is possible to closely contact the contacting inner surface to the contacted outer surface.

In the above screen unit, the screen pack preferably includes a screen pack body capable of externally fitting to the cartridge body, and a screen pack bottom which closes an opening at a tip end side of the screen pack body. The pressing mechanism preferably includes a bolt member and a nut member, which are capable of screwing each other so as to generate a force in a direction to press the screen pack bottom toward the base end with respect to the cartridge bottom.

In this mode, by means of the bolt member and the nut member, the screen pack bottom can be pressed toward the base end with respect to the cartridge bottom. Thereby, unlike in the case of pressing the screen pack body toward the base end, it is possible to press the whole of the screen pack toward the base end by pressing the screen pack bottom.

In the above screen unit, the bolt member preferably passes through the screen pack bottom and the cartridge bottom from the tip end side, and the nut member is preferably capable of being screwed onto the bolt member from the inside of the cartridge.

In this mode, by screwing the bolt member from the outside of the cartridge into the nut member positioned inside the cartridge, the cartridge bottom can be pressed to the screen pack bottom.

Preferably, in the above screen unit, the bolt member is fixed to a surface at the tip end side of the cartridge bottom and passes through the screen pack from the cartridge bottom to extend toward the tip end, and the nut member is capable of being screwed onto the bolt member from the tip end side of the screen pack.

In this mode, by means of the bolt member fixed to the cartridge bottom and the nut member into which the bolt member is screwed from the tip end side, the screen pack can be pressed. Thereby, unlike in case of providing the nut member inside the cartridge, it is possible to limit the mounting positions of the bolt member and the nut member to the outside of the cartridge. Thereby, mounting operation of the bolt member and the nut member is facilitated.

In the above screen unit, in the cartridge bottom, a plurality of through holes through which the material filtered by the screen pack is allowed to pass is preferably formed.

In this mode, a plurality of through holes is formed in the cartridge bottom. Thereby, an area of the cartridge bottom (screen pack bottom) can be effectively utilized for filtration of material.

In addition, the present invention provides a screen changer, including: a housing having a flow passage through which material is passed; a slide member slidably mounted to the housing; and the screen unit which is provided on the slide member for filtering material passing through the flow passage of the housing.

According to the present invention, a screen changer which allows for eliminating rigorous dimension control for preventing the short path phenomenon of material and which has cost advantages can be provided.

In the above screen changer, the slide member preferably includes a slide body in which a connecting passage connected to the flow passage of the housing is formed, a partition wall which divides the connecting passage into an upstream side chamber and a downstream side chamber and in which a communication passage for communicating the upstream side chamber and the downstream side chamber is formed, and a mounted portion to which the screen unit is mounted detachably so as to guide the filtered material into the communication passage from the upstream side chamber. Preferably, by mounting the screen unit to the mounted portion, inflow of material heading into the communication passage from the upstream side chamber without passing through the screen unit is restricted.

In the above mode, by mounting the screen unit to the mounted portion, inflow of material heading into the communication passage from the upstream side chamber without passing through the screen unit is restricted. Therefore, while enabling attachment and detachment of the screen unit, the filtered material can be surely guided to the downstream side chamber, in a state that the screen unit is mounted.

In the above screen changer, the screen unit preferably includes a male screw part formed in the outer surface of a base end of the cartridge body, and the mounted portion preferably includes a female screw part capable of being screwed onto the male screw part. Preferably, a base end surface of the cartridge body and a surface facing a tip end side of the partition wall are abutted in response to screw engagement of the male screw part and the female screw part, thereby restricting inflow of material passing through between the cartridge body and the partition wall.

In the above mode, by using a force of screw engagement of the male screw part and the female screw part as a force by which the cartridge body and the partition wall are abutted, inflow of material passing through between the cartridge body and the partition wall can be restricted. Therefore, restricting state of inflow of material can be maintained in a state that the screen unit is mounted. In addition, in the above mode, by abutment of the cartridge body and the partition wall, screw engagement of the male screw part and the female screw part is restricted. Thus, it is possible to surely inform an operator of an end point position of screw engagement of the male screw part and the female screw part.

### INDUSTRIAL APPLICABILITY

According to the present invention, a screen unit which allows for eliminating rigorous dimension control for preventing the short path phenomenon of material and which has cost advantages, and a screen changer equipped with the same can be provided.

### REFERENCE SIGNS LIST

- S1:: Upstream side chamber
- S2:: Downstream side chamber
- 1:: Screen unit
- 2:: Screen changer
- 3:: Housing
- 4:: Slide member
- 5:: Flow passage
- 9:: Connecting passage
- 12:: Through hole
- 13:: Cartridge
- 14:: Screen pack
- 15:: Hole-formed portion
- 17:: Male screw part
- 18:: Female screw part
- 21:: Contacted outer surface
- 22:: Contacting inner surface
- 23:: Pressing mechanism
- 24:: Flat part
- 25:: Bolt member
- 26:: Nut member
- 30:: Cartridge body
- 31:: Cartridge bottom
- 32:: Screen pack body
- 33:: Screen pack bottom
- 34a:: Abutting surface
- 35a:: Base end surface
- 39:: Partition wall
- 40:: Mounted portion
- 40a:: Abutted surface

## Claims

1. A screen unit (1) for removing foreign matter from material, comprising:
a cartridge (13) including a cylindrical cartridge body (30) and a cartridge bottom (31) which closes an opening at a tip end side of the cartridge body (30); and
a cylindrical screen pack (14) capable of externally fitting from the tip end side to the cartridge body (30) and capable of filtering the material, wherein
the cartridge body (30) includes a hole-formed portion (15) having a plurality of through holes (12) through which the material filtered by the screen pack (14) is allowed to pass, and a contacted outer surface (21) which is provided closer to a base end side than to the hole-formed portion (15) and inclined so as to expand radially outwardly with decreasing distance to the base end, and
the screen pack (14) has a contacting inner surface (22) which closely contacts the outer surface (21) of the cartridge (13) when being pressed from the tip end side toward the base end with the hole-formed portion (15) covered from outside, wherein
the screen pack (14) includes a screen pack body (32) capable of externally fitting to the cartridge body (30), and a screen pack bottom (33) which closes an opening at a tip end side of the screen pack body (32),
**characterized by** further comprising a pressing mechanism (23) for pressing the screen pack (14) from the tip end side toward the base end with respect to the cartridge (13) wherein said pressing mechanism (23) includes a bolt member (25) and a nut member (26), which are capable of screwing each other so as to generate a force in a direction to press the screen pack bottom (33) toward the base end with respect to the cartridge bottom (31).

2. The screen unit (1) according to claim 1, wherein
the contacting inner surface (22) is inclined at an angle parallel to the contacted outer surface (21).

3. The screen unit (1) according to claim 1, wherein
a portion, which is connected to the base end side of the contacted outer surface (21), of the outer surface of the cartridge body (30) is a size that is equivalent to or hidden behind the most expanded portion of the contacted outer surface (21) when viewed from the tip end side.

4. The screen unit (1) according to claim 1, wherein
the screen pack body has a length capable of covering at least a part of the contacted outer surface (21) from outside in a state that the screen pack bottom (33) and the cartridge bottom (31) are abutted.

5. The screen unit (1) according to claim 1, wherein
the bolt member (25) passes through the screen pack bottom (33) and the cartridge bottom (31) from the tip end side, and
the nut member (26) is capable of being screwed onto the bolt member (25) from the inside of the cartridge (13).

6. The screen unit (1) according to claim 1, wherein
the bolt member (25) is fixed to a surface at the tip end side of the cartridge bottom (31) and passes through the screen pack (14) from the cartridge bottom (31) to extend toward the tip end, and
the nut member (26) is capable of being screwed onto the bolt member (25) from the tip end side of the screen pack (14).

7. The screen unit (1) according to claim 6, wherein
in the cartridge bottom (31), a plurality of through holes (12) through which the material filtered by the screen pack (14) is allowed to pass is formed.

8. A screen changer (2), comprising:
a housing (3) having a flow passage (5) through which material is passed;
a slide member (4) slidably mounted to the housing (3); and
the screen unit (1) according to claim 1 which is provided on the slide member (4) for filtering material passing through the flow passage (5) of the housing (3).

9. The screen changer (2) according to claim 8, wherein
the slide member (4) includes a slide body (38) in which a connecting passage (9) connected to the flow passage (5) of the housing (3) is formed, a partition wall (39) which divides the connecting passage (9) into an upstream side chamber (S1) and a downstream side chamber (S2) and in which a communication passage (11) for communicating the upstream side chamber (S1) and the downstream side chamber (S2) is formed, and a mounted portion (40) to which the screen unit (1) is mounted detachably so as to guide the filtered material into the communication passage (11) from the upstream side chamber (S1), and
by mounting the screen unit (1) to the mounted portion, inflow of material heading into the communication passage (11) from the upstream side chamber (S1) without passing through the screen unit (1) is restricted.

10. The screen changer according to claim 9, wherein
the screen unit (1) includes a male screw part (17) formed in the outer surface of a base end of the cartridge body (30),
the mounted portion (40) includes a female screw part (18) capable of being screwed onto the male screw part (17), and
a base end surface (35a) of the cartridge body (30) and a surface facing a tip end side of the partition wall (39) are abutted in response to screw engagement of the male screw part (17) and the female screw part (18), thereby restricting inflow of material passing through between the cartridge body (30) and the partition wall (39).

## Patentansprüche

1. Siebeinheit (1) zum Entfernen von Fremdteilchen von einem Material, mit:
einer Kartusche (13), die einen zylindrischen Kartuschenkörper (30) und einen Kartuschenboden (31) hat, der eine Öffnung an einer Spitzenendseite des Kartuschenkörpers (30) schließt;
einem zylindrischen Siebpack (14), das in der Lage ist, von außen von der Spitzenendseite an den Kartuschenkörper (30) gepasst zu werden, und das in der Lage ist, das Material zu filtern, wobei
der Kartuschenkörper (30) einen lochausgebildeten Abschnitt (15), der eine Vielzahl von Durchgangslöchern (12) hat, durch die hindurch das Material, das durch den Siebpack (14) gefiltert ist, hindurchgehen kann, und eine berührte Außenfläche (21) hat, die näher zu einer Basisendseite als zu dem lochausgebildeten Abschnitt (15) vorgesehen ist und geneigt ist, um sich radial nach außen mit einer sich verringernden Distanz zu dem Basisende aufzuweiten, und
der Siebpack (14) eine berührende Innenfläche (22) hat, die die Außenfläche (21) der Kartusche (13) eng berührt, wenn er von der Spitzenendseite in Richtung zu dem Basisende gedrückt wird, wobei der lochausgebildete Abschnitt (15) von der Außenseite bedeckt ist, wobei
der Siebpack (14) einen Siebpackkörper (32), der an den Kartuschenkörper (30) von außen gepasst werden kann, und einen Siebpackboden (33) hat, der eine Öffnung an einer Spitzenendseite des Siebpackkörpers (32) schließt,
**dadurch gekennzeichnet, dass** sie des Weiteren Folgendes aufweist:
einen Drückmechanismus (23) zum Drücken des Siebpacks (14) von der Spitzenendseite zu der Basisendseite mit Bezug auf die Kartusche (13), wobei der Drückmechanismus (23) ein Bolzenbauteil (25) und ein Mutterbauteil (26) hat, die miteinander verschraubt werden können, um eine Kraft in einer Richtung zu erzeugen, um den Siebpackboden (33) in Richtung zu dem Basisende mit Bezug auf den Kartuschenboden (31) zu drücken.

2. Siebeinheit (1) nach Anspruch 1, wobei die berührende Innenfläche (22) in einem Winkel parallel zu der berührten Außenfläche (21) geneigt ist.

3. Siebeinheit (1) nach Anspruch 1, wobei ein Abschnitt, der mit der Basisendseite der berührten Außenfläche (21) verbunden ist, von der Außenfläche des Kartuschenkörpers (30) eine Größe hat, die äquivalent ist zu oder versteckt ist hinter dem am meisten aufgeweiteten Abschnitt der berührten Außenfläche (21) aus Sicht von der Spitzenendseite.

4. Siebeinheit (1) nach Anspruch 1, wobei der Siebpackkörper eine Länge hat, die wenigstens einen Teil der berührten Außenfläche (21) von einer Außenseite in einem Zustand abdecken kann, in dem der Siebpackboden (33) und der Kartuschenboden (31) aneinander anliegen.

5. Siebeinheit (1) nach Anspruch 1, wobei
das Bolzenbauteil (25) durch den Siebpackboden (33) und den Kartuschenboden (31) von der Spitzenendseite hindurchgeht, und
das Mutterbauteil (26) auf das Bolzenbauteil (25) von der Innenseite der Kartusche (13) geschraubt werden kann.

6. Siebeinheit (1) nach Anspruch 1, wobei
das Bolzenbauteil (25) an einer Fläche an der Spitzenendseite des Kartuschenbodens (31) fixiert ist und durch den Siebpack (14) von dem Kartuschenboden (31) hindurchgeht, um sich zu dem Spitzenende zu erstrecken, und
das Mutterbauteil (26) auf das Bolzenbauteil (25) von der Spitzenendseite des Siebpacks (14) geschraubt werden kann.

7. Siebeinheit (1) nach Anspruch 6, wobei in dem Kartuschenboden (31) eine Vielzahl von Durchgangslöchern (12), durch die das Material, das durch den Siebpack (14) gefiltert ist, hindurchgehen kann, ausgebildet ist.

8. Siebwechsler (2) mit:
einem Gehäuse (3), das einen Strömungsdurchgang (5) hat, durch den ein Material hindurchgeführt wird;
einem Gleitbauteil (4), das gleitbar an dem Gehäuse (3) montiert ist; und
der Siebeinheit (1) nach Anspruch 1, die an dem Gleitbauteil (4) vorgesehen ist, zum Filtern eines Materials, das durch den Strömungsdurchgang (5) des Gehäuses (3) hindurchgeht.

9. Siebwechsler (2) nach Anspruch 8, wobei
das Gleitbauteil (4) einen Gleitkörper (38), in dem ein Verbindungsdurchgang (9) ausgebildet ist, der mit dem Strömungsdurchgang (5) des Gehäuses (3) verbunden ist, eine Trennwand (39), die den Verbindungsdurchgang (9) in eine stromaufwärtsseitige Kammer (S1) und eine stromabwärtsseitige Kammer (S2) unterteilt und in der ein Verbindungsdurchgang (11) zum Verbinden der stromaufwärtsseitigen Kammer (S1) und der stromabwärtsseitigen Kammer (S2) ausgebildet ist, und einen Montageabschnitt (40) hat, an dem die Siebeinheit (1) abnehmbar montiert ist, um das gefilterte Material von der stromaufwärtsseitigen Kammer (S1) in den Verbindungsdurchgang (11) zu führen, und
durch Montieren der Siebeinheit (1) an dem Montageabschnitt, ein Einströmen eines Materials beschränkt ist, das von der stromaufwärtsseitigen Kammer (S1) in den Verbindungsdurchgang (11) geleitet wird, ohne durch die Siebeinheit (1) hindurchzugehen.

10. Siebwechsler nach Anspruch 9, wobei
die Siebeinheit (1) einen Außengewindeteil (17) hat, der in der Außenfläche eines Basisendes des Kartuschenkörpers (30) ausgebildet ist,
der Montageabschnitt (40) einen Innengewindeteil (18) hat, der auf den Außengewindeteil (17) geschraubt werden kann,
eine Basisendfläche (35a) des Kartuschenkörpers (30) und eine Fläche, die einer Spitzenendseite der Trennwand (39) zugewandt ist, in Erwiderung auf einen Schraubeneingriff des Außengewindeteils (17) und des Innengewindeteils (18) in Anlage sind, wodurch ein Einströmen eines Materials beschränkt wird, das zwischen dem Kartuschenkörper (30) und der Trennwand (39) hindurchgeht.

## Revendications

1. Unité de crible (1) destinée à éliminer des corps étranger d'un matériau, comprenant :
une cartouche (13) qui comprend un corps de cartouche cylindrique (30) et un fond de cartouche (31) qui ferme une ouverture au niveau d'une extrémité du corps de cartouche (30) ; et
un crible cylindrique (14) capable d'être placé en externe entre l'extrémité et le corps de cartouche (30) et capable de filtrer le matériau,
dans laquelle
le corps de cartouche (30) comprend une partie en forme d'orifice (15) qui possède une pluralité d'orifices traversants (12) par lesquels le matériau filtré par le crible (14) peut passer, et une surface externe touchée (21) qui est prévue plus près d'une extrémité de base que de la partie en forme d'orifice (15) et inclinée de façon à s'étendre radialement vers l'extérieur lorsque la distance par rapport à l'extrémité de base diminue, et
le crible (14) possède une surface interne de contact (22) qui touche étroitement la surface externe (21) de la cartouche (13) lorsqu'elle est appuyée de l'extrémité vers l'extrémité de base avec la partie en forme d'orifice (15) recouverte depuis l'extérieur, dans laquelle le crible (14) comprend un corps de crible (32) capable d'être placé en externe sur le corps de cartouche (30), et un fond de crible (33) qui ferme une ouverture au niveau d'une extrémité du corps de crible (32),
**caractérisée en ce qu'**elle comprend en outre
un mécanisme de pression (23) destiné à appuyer sur le crible (14) de l'extrémité vers l'extrémité de base par rapport à la cartouche (13), dans laquelle ledit mécanisme de pression (23) comprend un élément de boulon (25) et un élément d'écrou (26), qui peuvent être vissés l'un sur l'autre de façon à générer une force dans une direction destinée à appuyer le fond de crible (33) vers l'extrémité de base par rapport au fond de cartouche (31).

2. Unité de crible (1) selon la revendication 1, dans laquelle
la surface interne de contact (22) est inclinée à un angle parallèle à la surface externe touchée (21).

3. Unité de crible (1) selon la revendication 1, dans laquelle
une partie, qui est reliée à l'extrémité de base de la surface externe touchée (21), de la surface externe du corps de cartouche (30) possède une taille équivalente à ou est cachée derrière la partie la plus étendue de la surface externe touchée (21) lorsque l'on regarde depuis l'extrémité.

4. Unité de crible (1) selon la revendication 1, dans laquelle
le corps de crible possède une longueur capable de recouvrir au moins une partie de la surface externe touchée (21) depuis l'extérieur, dans un état dans lequel le fond de crible (33) et le fond de cartouche (31) sont en butée.

5. Unité de crible (1) selon la revendication 1, dans laquelle
l'élément de boulon (25) passe à travers le fond de crible (33) et le fond de cartouche (31) depuis l'extrémité, et
l'élément d'écrou (26) peut être vissé sur l'élément de boulon (25) depuis l'intérieur de la cartouche (13).

6. Unité de crible (1) selon la revendication 1, dans laquelle
l'élément de boulon (25) est fixé sur une surface au niveau de l'extrémité du fond de cartouche (31) et passe à travers le crible (14), depuis le fond de cartouche (31), afin de s'étendre vers l'extrémité, et
l'élément d'écrou (26) peut être vissé sur l'élément de boulon (25) depuis l'extrémité du crible (14).

7. Unité de crible (1) selon la revendication 6, dans laquelle
dans le fond de cartouche (31), plusieurs orifices traversants (12) par lesquels le matériau filtré par le crible (14) peut passer sont formés.

8. Changeur de crible (2), qui comprend :
une enceinte (3) qui possède un passage d'écoulement (5) par lequel passe le matériau ;
un coulisseau (4) monté de manière coulissante sur l'enceinte (3) ; et
l'unité de crible (1) selon la revendication 1, qui est prévue sur le coulisseau (4) afin de filtrer le matériau qui passe par le passage d'écoulement (5) de l'enceinte (3).

9. Changeur de crible (2) selon la revendication 8, dans lequel
le coulisseau (4) comprend un corps de coulisseau (38) dans lequel un passage de raccordement (9) relié au passage d'écoulement (5) de l'enceinte (3) est formé, une paroi de séparation (39) qui divise le passage de raccordement (9) en une chambre amont (S1) et une chambre aval (S2), et dans laquelle un passage de communication (11) destiné à faire communiquer la chambre amont (S1) et la chambre aval (S2) est formé, et une partie montée (40) sur laquelle l'unité de crible (1) est montée de manière amovible de façon à guider le matériau filtré vers le passage de communication (11) depuis la chambre amont (S1), et
en montant l'unité de crible (1) sur la partie montée, l'afflux de matériau vers le passage de communication (11), depuis la chambre amont (S1), sans passer par l'unité de crible (1), est restreint.

10. Changeur de crible selon la revendication 9, dans lequel
l'unité de crible (1) comprend une partie de vis mâle (17) formée dans la surface externe d'une extrémité de base du corps de cartouche (30),
la partie montée (40) comprend une partie de vis femelle (18) qui peut être vissée sur la partie de vis mâle (17), et
une surface d'extrémité de base (35a) du corps de cartouche (30) et une surface tournée vers une extrémité de la paroi de séparation (39) sont en butée en réponse au vissage de la partie de vis mâle (17) et de la partie de vis femelle (18), afin de restreindre l'afflux de matériau qui passe entre le corps de cartouche (30) et la paroi de séparation (39).
